# FASCICULE DE BREVET EUROPEEN

(11) **EP 4 045 399 B1**
(45) Date de publication et mention de la délivrance du brevet: **29.05.2024**
(21) Numéro de dépôt: 20790000.2
(22) Date de dépôt: 15.10.2020
(51) Int. Cl.: B64C 25/28, E05B 15/00, E05B 81/64, B64D 45/00

(54) **BOITIER D'ACCROCHAGE MUNI DE MOYENS DE DETECTION DE RETENUE**
SICHERUNGSMECHANISMUS MIT RETENTIONSDETEKTIONSMITTELN
UPLOCK PROVIDED WITH RETENTION DETECTION MEANS

(30) Priorité: 17.10.2019 FR 1911643
(43) Date de publication de la demande: 24.08.2022
(73) Titulaire: Safran Landing Systems, 78140 Vélizy-Villacoublay (FR)
(72) Inventeur: DUFAY, Ludovic, 77550 MOISSY-CRAMAYEL (FR); ARBENTZ, Michel, 77550 MOISSY-CRAMAYEL (FR); PASCAL, Vincent, 77550 MOISSY-CRAMAYEL (FR)
(74) Mandataire: Cabinet Boettcher
(86) Numéro de dépôt international: PCT/EP2020/079133
(87) Numéro de publication internationale: WO 2021/074347

(56) Documents cités:
- EP-A1- 1 342 664
- WO-A1-2018/189299

## Description

L'invention concerne un boîtier d'accrochage tel que ceux qui sont utilisés dans les aéronefs pour la retenue, en position escamotée, d'atterrisseurs de l'aéronef ou de portes de fermeture de soutes, et plus généralement pour la retenue de tout élément mobile de l'aéronef dans l'une de ses positions.

De façon connue en soi, un tel boîtier d'accrochage comprend un crochet monté pivotant sur le boîtier entre une position de retenue et une position de libération, et un organe de verrouillage du crochet qui est rappelé vers une position de verrouillage du crochet quand celui-ci est amené en position de retenue, et qui est repoussé par un actionneur de déverrouillage vers une position de déverrouillage pour permettre au crochet de basculer vers la position de libération et ainsi libérer l'élément mobile.

Le crochet coopère avec une olive de l'élément mobile qui, quand l'élément arrive vers la position dans laquelle il doit être retenu, pousse le crochet vers la position de retenue dans laquelle le crochet est automatiquement verrouillé par l'organe de verrouillage. L'olive de l'élément mobile est alors emprisonnée dans le crochet et ne peut s'en libérer. Pour permettre la libération de l'élément mobile, il convient de repousser l'organe de verrouillage en position de déverrouillage, par exemple au moyen d'un actionneur de déverrouillage. L'élément mobile est alors libre de quitter la position dans laquelle il était retenu, l'olive entraînant le crochet de la position de retenue vers la position de libération.

Le boîtier d'accrochage est habituellement pourvu d'un capteur de proximité pour détecter la position dans laquelle l'organe de verrouillage se trouve. A cet effet, l'organe de verrouillage est équipé d'une cible mobile entre une position éloignée du capteur de proximité et une position proche du capteur de proximité, chaque position de la cible étant associée à l'une des positions l'organe de verrouillage, de sorte que le signal électrique généré par le capteur de proximité change quand l'organe de verrouillage passe de la position de déverrouillage à la position de verrouillage et réciproquement. La détection de l'organe de verrouillage en position de verrouillage signifie que l'olive a repoussé le crochet vers la position de retenue dans laquelle il est automatiquement verrouillé, de sorte que cette détection correspond également à une détection indirecte de la retenue de l'élément mobile.

Cependant, il a pu arriver, alors que le crochet était bien détecté en position de retenue, que l'olive n'était en réalité pas retenue par le crochet en raison de la rupture d'une partie du crochet l'empêchant de retenir l'olive. Dans ces circonstances exceptionnelles, la détection du crochet en position de retenue ne garantit pas que l'élément mobile soit effectivement retenu.

Il a été proposé dans le document WO2018/189299 de munir le boîtier d'un deuxième capteur de proximité pour détecter si l'olive est effectivement présente dans le crochet quand celui-ci est en position de retenue. A cet effet, une deuxième cible est portée par un levier indicateur repoussé par l'olive elle-même, et qui place la deuxième cible dans une position éloignée du capteur si l'olive n'est pas dans le crochet, et dans une position proche du deuxième capteur si l'olive est dans le crochet en position retenue. Ainsi, l'élément mobile sera considéré comme effectivement retenu si le premier capteur indique que l'organe de verrouillage est en position de verrouillage et si le deuxième capteur indique que l'olive est bien présente dans le crochet. Cependant, l'agencement d'un levier indicateur coopérant avec l'olive peut se révéler difficile compte tenu de la présence encombrante du crochet masquant une bonne partie de l'olive lorsque l'élément mobile est retenu en position.

### OBJET DE L'INVENTION

L'invention a pour but de proposer un boîtier d'accrochage permettant la détection simple du crochet en position de retenue et de l'olive présente dans le crochet.

### RESUME DE L'INVENTION

En vue de la réalisation de ce but, on propose un boîtier d'accrochage pour la retenue sélective d'une olive d'un élément mobile, le boîtier d'accrochage comportant :
- un crochet mobile entre une position de libération et une position de retenue d'une olive de l'élément mobile ;
- un organe de verrouillage interagissant avec le crochet et mobile entre une position de verrouillage dans laquelle il immobilise le crochet en position de retenue, et une position de déverrouillage dans laquelle le crochet est libre de se déplacer sous la poussée de l'olive de l'élément mobile ;
- des moyens de détection adaptés à détecter une situation dans laquelle le crochet est en position de retenue et si l'olive est présente dans le crochet.

Selon l'invention, les moyens de détection comportent un premier capteur coopérant avec le crochet ou l'organe de verrouillage pour détecter si le crochet est en position de retenue, et un deuxième capteur disposé pour coopérer une partie de l'élément mobile distincte de l'olive pour détecter une présence de l'élément mobile à proximité immédiate du boîtier d'accrochage dans la position qu'occupe l'élément mobile lorsque l'olive est présente dans le crochet.

Ainsi, le deuxième capteur est utilisé pour confirmer que, quand le crochet est en position de retenue, l'élément mobile est bien dans la position qu'il est supposé occuper quand l'olive est présente dans le crochet, sans pour autant détecter la présence de l'olive elle-même dans le crochet. Ainsi, par un simple traitement logique des signaux des deux capteurs, il est facile de vérifier que le crochet est bien en position de retenue ET que l'élément mobile est bien dans la position qu'il est censé occuper lorsque l'olive est retenue par le crochet.

Selon un premier mode particulier de réalisation de l'invention, le deuxième capteur est adapté à détecter directement une présence de l'élément mobile à proximité immédiate du boîtier d'accrochage dans la position qu'occupe l'élément mobile lorsque l'olive est présente dans le crochet.

Par « directement », on entend que cette détection se fait sans pièce intermédiaire mobile manoeuvrée par l'élément mobile. Cette disposition ne requiert donc aucune pièce mobile supplémentaire sur le boîtier d'accrochage. Il suffit d'installer une cible sur l'élément mobile adaptée à coopérer avec le deuxième capteur pour en faire changer le signal lorsque la cible est à proximité immédiate du deuxième capteur, ou utiliser un deuxième capteur sensible à la seule présence de l'élément mobile à proximité immédiate du capteur, comme un microcontacteur ou un capteur optique, de sorte que l'élément mobile constitue la cible du capteur.

De préférence alors, le deuxième capteur est un capteur de proximité, la partie de l'élément mobile coopérant avec le deuxième capteur formant une cible.

Selon un deuxième mode particulier de réalisation de l'invention, le deuxième capteur coopère indirectement avec la partie de l'élément mobile via un levier indicateur monté mobile sur le boîtier d'accrochage, la partie de l'élément mobile déplaçant le levier entre une position dans laquelle le levier indicateur est proche du deuxième capteur et une position dans laquelle le levier indicateur est éloigné du deuxième capteur, l'une desdites positions correspondant à une présence de l'élément mobile à proximité immédiate du boîtier d'accrochage dans la position qu'occupe l'élément mobile lorsque l'olive est présente dans le crochet.

Dans ce mode de réalisation, la détection est indirecte, mais vise toujours à détecter une présence de l'élément mobile à proximité immédiate du boîtier d'accrochage dans la position qu'occupe l'élément mobile lorsque l'olive est présente dans le crochet sans pour autant coopérer directement avec l'olive.

De préférence alors, le deuxième capteur est un capteur de proximité, la partie de l'élément mobile coopérant avec le deuxième capteur formant une cible.

Avantageusement, au moins un des capteurs est monté sur une partie fixe.

L'invention concerne également un train d'atterrissage comprenant un élément mobile entre une position abaissée et une position relevée dans laquelle une olive solidaire de l'élément mobile est reçue dans le crochet d'un boîtier d'accrochage selon l'invention, le deuxième capteur étant positionné pour s'étendre au voisinage d'une partie solidaire de l'élément mobile et distincte de l'olive pour détecter une présence de l'élément mobile à proximité immédiate du boîtier d'accrochage.

Selon deux modes de réalisation : l'élément mobile est un atterrisseur et l'élément mobile est une porte de soute.

### BREVE DESCRIPTION DES DESSINS

L'invention sera mieux comprise à la lumière de la description détaillée qui suit d'un mode particulier de réalisation de l'invention en référence aux dessins annexés parmi lesquels :
[Fig. 1] la figure 1 est une vue schématique de face d'un boîtier d'accrochage selon un premier mode particulier de réalisation de l'invention à détection directe, illustré alors que le crochet est en position de libération, l'olive de l'élément mobile s'approchant du crochet ;
[Fig. 2] la figure 2 est une vue analogue à celle de la figure 1, illustrant le crochet en position de verrouillage alors que l'olive est effectivement retenue par le crochet ;
[Fig. 3] la figure 3 est une vue analogue à celle de la figure 1, illustrant le crochet en position de verrouillage alors que l'olive s'est libérée du crochet à la suite d'une rupture d'une partie de celui-ci ;
[Fig. 4] la figure 4 est une vue schématique de face d'un boîtier d'accrochage selon un deuxième mode particulier de réalisation de l'invention à détection indirecte avec levier indicateur, illustré alors que le crochet est en position de libération, l'olive de l'élément mobile s'approchant du crochet ;
[Fig. 5] la figure 5 est une vue analogue à celle de la figure 4, illustrant le crochet en position de verrouillage alors que l'olive est effectivement retenue par le crochet ;
[Fig. 6] la figure 6 est une vue schématique selon la flèche G de la figure 5 montrant un premier agencement possible du deuxième capteur vis-à-vis de la cible portée par le levier indicateur ;
[Fig. 7] la figure 7 est une vue schématique selon la flèche G de la figure 5 montrant un deuxième agencement possible du deuxième capteur vis-à-vis de la cible portée par le levier indicateur.

### DESCRIPTION DETAILLEE DE L'INVENTION

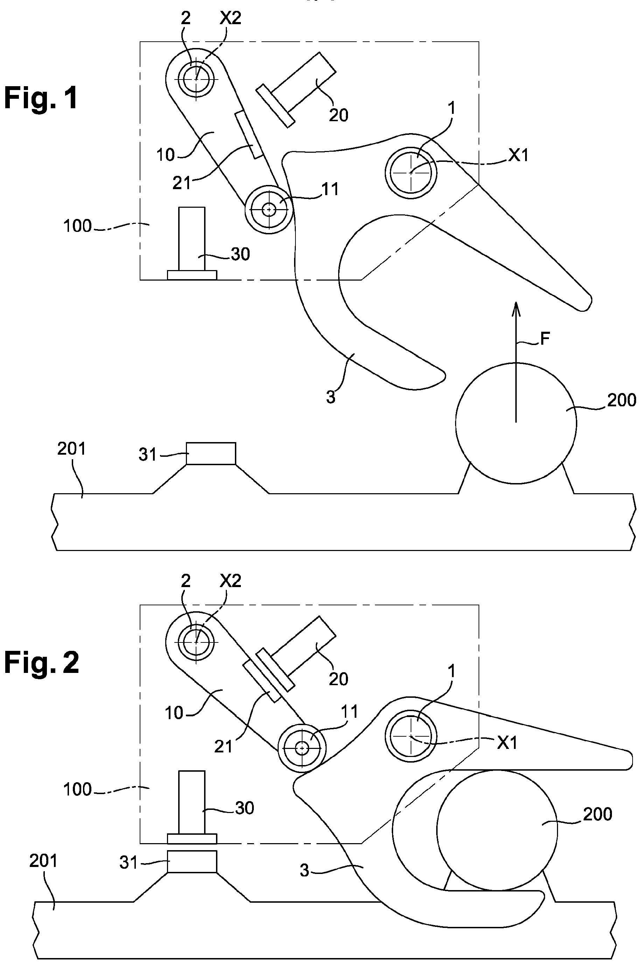

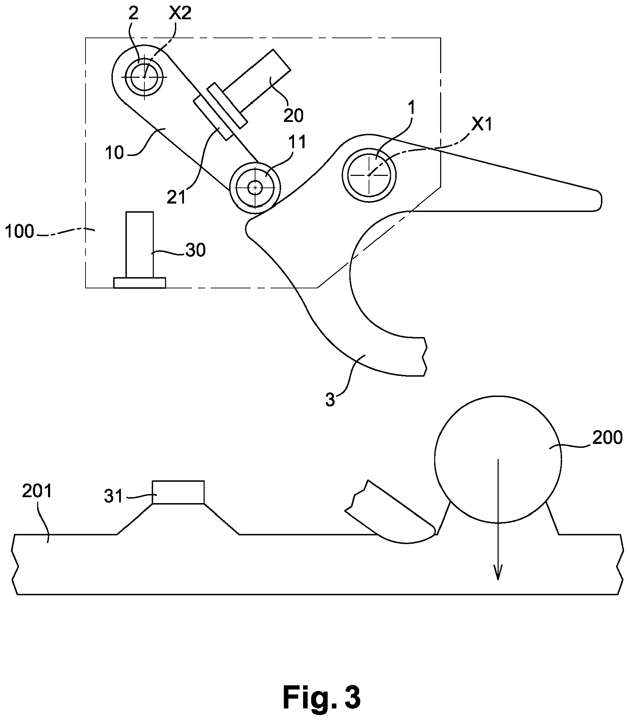

En référence aux figures 1 à 3, et conformément à un premier mode particulier de réalisation de l'invention, le boîtier d'accrochage de l'invention comporte une platine 100 portant un premier pivot 1 et un deuxième pivot 2, définissant des axes de pivotement X1 et X2 parallèles. Un crochet 3 est monté pivotant sur le premier pivot 1 selon l'axe X1 entre une position de libération illustrée à la figure 1 vers laquelle il est rappelé par un ressort (non représenté), et une position de retenue illustrée sur les figures 2 et 3. Le crochet 3 comporte une partie de crochetage 5 dans laquelle une olive 200 d'un élément mobile 201 (par exemple un atterrisseur d'aéronef, ou une porte de soute) est destinée à être retenue par le boîtier d'accrochage pour immobiliser l'élément mobile 201 (par exemple en position escamotée pour l'atterrisseur, ou en position fermée pour la porte de soute). Pour ce faire, l'élément mobile est déplacé par un actionneur de manoeuvre et l'olive 200 suit la trajectoire F en repoussant le crochet 3 vers la position de verrouillage dans laquelle il retient l'olive 200. A cet effet, un organe de verrouillage 10 est monté pivotant sur le deuxième pivot 2 selon l'axe X2 et comporte un galet 11 qui est en permanence en appui sur un profil de came 6 du crochet 3. L'organe de verrouillage 10 pivote entre une position de déverrouillage illustré à la figure 1, et une position de verrouillage illustrée sur les figures 2 et 3 dans laquelle il est rappelé automatiquement par un ressort (non représenté) et qu'il atteint automatiquement quand le crochet 3 arrive en position de retenue. Dans la position de verrouillage, l'organe de verrouillage 10 bloque le crochet 3 en position de retenue. Pour libérer l'olive 200, un actionneur de déverrouillage non représenté repousse l'organe de verrouillage 10 vers la position de déverrouillage, ce qui permet au crochet 3 de pivoter vers la position de libération et donc à l'olive 200 de quitter le crochet 3.

Ici, le boîtier d'accrochage est muni d'un premier capteur de proximité 20 coopérant avec une première cible 21 portée par l'organe de verrouillage 10 et qui est donc mobile entre une position éloignée du premier capteur de proximité 20 telle qu'illustrée à la figure 1 et une position proche du premier capteur de proximité telle qu'illustrée aux figures 2 et 3. Le signal du premier capteur de proximité 20 change lorsque la première cible 21 associée passe de l'une à l'autre des positions, ce qui permet de détecter si l'organe de verrouillage 10 est en position de verrouillage, et donc le crochet en position de retenue, ou si l'organe de verrouillage 10 est en position de déverrouillage et donc le crochet en position de libération. La première cible 21 peut en variante être portée par le crochet 3, le premier capteur de proximité 20 étant alors disposé de manière fixe sur le boîtier d'accrochage pour coopérer avec la première cible portée par le crochet 3.

Le boîtier d'accrochage comporte par ailleurs un deuxième capteur de proximité 30 disposé sur la platine 100 pour coopérer avec une deuxième cible 31 portée par l'élément mobile 201 de sorte que la cible soit mobile entre une position éloignée visible aux figures 1 et 3, et une position rapprochée visible à la figure 2 à proximité immédiate du deuxième capteur de proximité 30, qui correspond à la position de l'élément mobile 201 qu'il occupe quand l'olive 200 est présente dans le crochet 3. Le signal du deuxième capteur 30 change lorsque la deuxième cible 31 se déplace d'une position à l'autre, ce qui permet de déterminer si oui ou non l'élément mobile occupe une position qui doit être la sienne lorsque l'olive 200 est bien retenue par le crochet. Le deuxième capteur détecte directement la proximité de l'élément mobile 201 du boîtier d'accrochage 100.

Le fonctionnement du boîtier d'accrochage de l'invention est le suivant. La situation de départ est illustrée à la figure 1 où le crochet 3 est en position de libération, et l'organe de verrouillage 10 en position de déverrouillage. Dans cette position, le premier capteur de proximité 20 et la première cible 21 sont éloignés l'un de l'autre, et le deuxième capteur de proximité 30 et la deuxième cible 31 sont éloignés l'un de l'autre. L'élément mobile 201 est alors manoeuvré pour se rapprocher de sa position d'immobilisation. L'olive 200 se déplace alors selon la direction F et repousse le crochet 3 vers la position de retenue. Quand le crochet 3 atteint la position de retenue, l'organe de verrouillage 10 se place automatiquement en position de verrouillage pour bloquer le crochet 3 en position de retenue. Dans cette position illustrée à la figure 2, le premier capteur de proximité 20 et la première cible 21 sont rapprochés l'un de l'autre, de sorte que le signal du premier capteur de proximité 20 change. De même, le deuxième capteur de proximité 30 et la deuxième cible 31 sont rapprochés l'un de l'autre, de sorte que le signal du deuxième capteur de proximité 30 change ce qui permet de déterminer que l'olive 200 est bien présente dans le crochet 3.

Il peut arriver que le crochet 3 se brise et ne retienne plus l'olive 200. Dans cette situation illustrée à la figure 3, l'élément mobile 201 s'est déplacé et l'olive 200 a quitté le crochet 3 (par exemple sous l'effet de la gravité) alors que celui-ci est bien immobilisé en position de retenue. Ce faisant, la deuxième cible 31 s'est éloignée du deuxième capteur de proximité 30. Le signal de celui-ci change, indiquant que l'olive 200 n'est plus retenue par le crochet 3, bien que celui-ci reste immobilisé en position de retenue.

La combinaison des signaux des deux capteurs permet donc de discriminer quatre situations :

**[Table 1]**

| | | | | |
|---|---|---|---|---|
| Premier capteur/ première cible | éloigné | Proche | Proche | éloigné |
| Deuxième capteur/ deuxième cible | éloigné | Proche | éloigné | proche |
| Situation : | figure 1 | figure 2 | figure 3 | Problème de verrouillage du crochet |

Notamment, la combinaison permet de repérer la situation de la figure 3 dans laquelle le crochet 3 est signalé comme verrouillé alors que l'élément mobile 201 n'est pas retenu par le crochet.

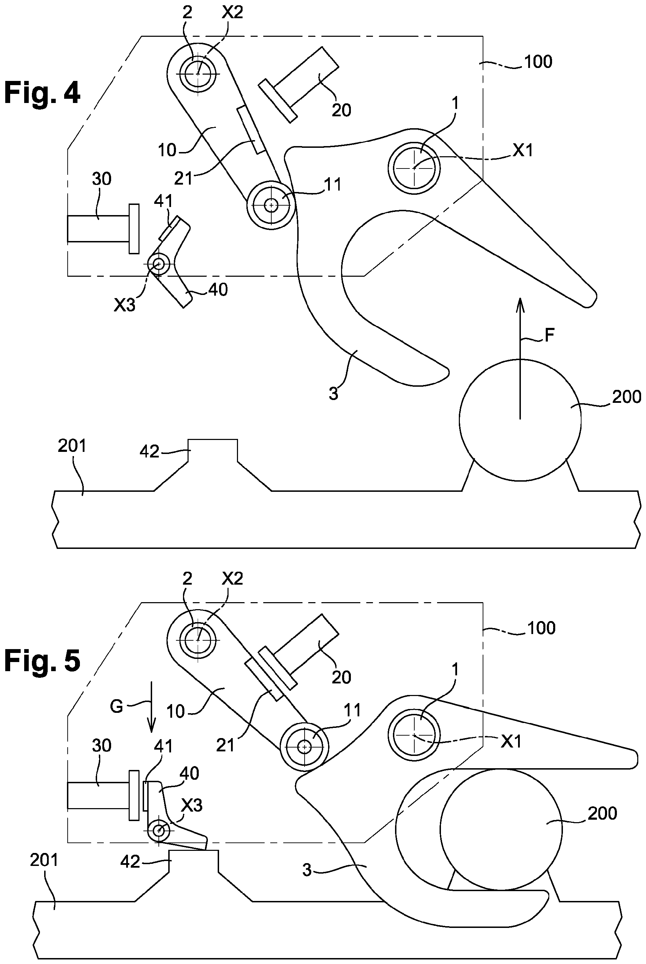

Selon un deuxième mode particulier de réalisation illustré aux figures 4 et 5, le boîtier d'accrochage 100 est équipé d'un levier indicateur 40 monté pivotant sur le boîtier d'accrochage selon un axe X3 parallèle aux axes X1 et X2. Le levier indicateur 40 comporte une branche destinée à être déplacée par un poussoir 42 de l'élément mobile 201 et une deuxième branche portant une deuxième cible 41, destinée à coopérer avec le deuxième capteur 30. Sur la figure 4, lorsque l'élément mobile 201 est éloigné du boîtier d'accrochage 100, le levier indicateur 40 est rappelé dans la position illustrée dans laquelle la deuxième cible 41 est éloignée du deuxième capteur 30. Sur la figure 5, l'élément mobile 201 est à proximité immédiate du boîtier d'accrochage 100 et le levier indicateur 40 est repoussé par le poussoir 42 de l'élément mobile distinct de l'olive 200 de sorte que la deuxième cible 41 soit amenée dans une position proche du deuxième capteur 30. Il s'agit alors d'une détection indirecte d'une partie de l'élément mobile (en l'occurrence le poussoir 42) par l'intermédiaire d'un levier indicateur. Le levier indicateur 40 ne coopère pas avec l'olive 200, mais avec une partie distincte de l'élément mobile, ce qui facilite l'installation du levier indicateur 40. Cependant, comme dans le mode de réalisation précédent, cette détection permet de s'assurer que l'olive 200 est bien présente dans le crochet, sans toutefois détecter directement l'olive 200.

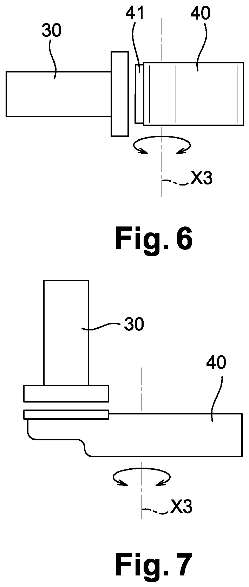

La figure 6 illustre l'agencement relatif du deuxième capteur 30 et de la cible 41 dans le deuxième mode de réalisation illustré aux figures 4 et 5. On constate que la cible 41 et le deuxième capteur 30 ont une trajectoire relative concourante. En effet, la cible 41 est montée à l'extrémité du levier indicateur 40 qui pivote autour d'un axe parallèle à la surface frontale du deuxième capteur 30 de sorte que, sur la partie terminale de son mouvement vers le deuxième capteur 30, la cible 41 se rapproche du deuxième capteur 30 en suivant une trajectoire sensiblement normale à la surface frontale du deuxième capteur 30. Cette disposition est satisfaisante s'il est possible de garantir qu'en toute circonstance, l'élément mobile 201 ne s'approchera pas du boîtier d'accrochage au risque d'une collision entre la cible 41 et le deuxième capteur. Si un tel risque existe, alors il est préférable d'utiliser l'agencement illustré à la figure 7, dans lequel la cible 41 et le deuxième capteur 30 ont une trajectoire tangentielle, éliminant tout risque de collision entre ces deux éléments. En effet, la cible 41 est alors montée à l'extrémité du levier indicateur 40 qui pivote autour d'un axe normal à la surface frontale du deuxième capteur 30 de sorte que, sur la partie terminale de son mouvement vers le deuxième capteur 30, la cible 41 se rapproche du deuxième capteur 30 en suivant une trajectoire parallèle à la surface frontale du deuxième capteur 30. Selon la position finale de l'élément mobile 201 par rapport à la platine 100, la cible 41 se trouvera plus ou moins en regard de la surface frontale du deuxième capteur 30 mais à la même distance de ladite surface frontale.

L'invention n'est pas limitée à ce qui vient d'être décrit, mais englobe au contraire toute variante entrant dans le cadre défini par les revendications.

En particulier, bien qu'ici on ait décrit l'utilisation de capteurs de proximité coopérant avec une cible dédiée, on pourra utiliser d'autres technologies, comme un microcontacteur ou un capteur optique. Dans ce cas, la cible sera directement l'organe de verrouillage ou le crochet pour le premier capteur, et l'élément mobile lui-même ou le levier indicateur pour le deuxième capteur.

Les capteurs sont de préférence montés sur des parties fixes mais l'un d'eux au moins peut être monté sur une partie mobile.

## Revendications

1. Boîtier d'accrochage pour la retenue sélective d'un d'une olive (200) d'un élément mobile (201), le boîtier d'accrochage comportant :
- un crochet (3) mobile entre une position de libération et une position de retenue d'une olive de l'élément mobile ;
- un organe de verrouillage (10) interagissant avec le crochet et mobile entre une position de verrouillage dans laquelle il immobilise le crochet en position de retenue, et une position de déverrouillage dans laquelle le crochet est libre de se déplacer sous la poussée de l'olive de l'élément mobile ;
- des moyens de détection adaptés à détecter une situation dans laquelle le crochet est en position de retenue et si l'olive est présente dans le crochet ;
dans lequel les moyens de détection comportent un premier capteur (20) coopérant avec le crochet ou l'organe de verrouillage pour détecter si le crochet est en position de retenue,
**caractérisé en ce que** les moyens de détection comportent en outre un deuxième capteur (30) disposé pour coopérer avec une partie de l'élément mobile (31;42) distincte de l'olive pour détecter une présence de l'élément mobile à proximité immédiate du boîtier d'accrochage dans la position qu'occupe l'élément mobile lorsque l'olive est présente dans le crochet.

2. Boîtier d'accrochage selon la revendication 1, dans lequel le deuxième capteur est adapté à coopérer directement avec une partie (31) de l'élément mobile (201) pour détecter une présence de l'élément mobile à proximité immédiate du boîtier d'accrochage dans la position qu'occupe l'élément mobile lorsque l'olive est présente dans le crochet.

3. Boîtier d'accrochage selon la revendication 2, dans lequel le deuxième capteur (30) est un capteur de proximité, la partie (31) de l'élément mobile coopérant avec le deuxième capteur formant une cible.

4. Boîtier d'accrochage selon la revendication 1, dans lequel le deuxième capteur (30) coopère indirectement avec la partie (42) de l'élément mobile via un levier indicateur monté mobile sur le boîtier d'accrochage, la partie de l'élément mobile déplaçant le levier entre une position dans laquelle le levier indicateur est proche du deuxième capteur et une position dans laquelle le levier indicateur est éloigné du deuxième capteur, l'une desdites positions correspondant à une présence de l'élément mobile à proximité immédiate du boîtier d'accrochage dans la position qu'occupe l'élément mobile lorsque l'olive est présente dans le crochet.

5. Boîtier d'accrochage selon la revendication 4, dans lequel le deuxième capteur (30) est un capteur de proximité coopérant avec une partie du levier indicateur formant une cible (41) pour le deuxième capteur.

6. Boîtier d'accrochage selon la revendication 5, dans lequel le deuxième capteur (30) et la cible (41) sont montés l'un par rapport à l'autre pour avoir une trajectoire relative concourante.

7. Boîtier d'accrochage selon la revendication 5, dans lequel la cible (41) est montée sur un levier indicateur (40) pour suivre une trajectoire parallèle à une surface frontale du deuxième capteur (30) de sorte que le deuxième capteur (30) et la cible (41) ont une trajectoire relative tangentielle.

8. Boîtier d'accrochage selon l'une quelconque des revendications précédentes, dans lequel au moins un des capteurs (20, 30) est un capteur de proximité.

9. Boîtier d'accrochage selon l'une quelconque des revendications précédentes, dans lequel au moins un des capteurs (20, 30) est monté sur une partie fixe.

10. Train d'atterrissage comprenant un élément mobile (201) entre une position abaissée et une position relevée dans laquelle une olive (200) solidaire de l'élément mobile (201) est reçue dans le crochet (3) d'un boîtier d'accrochage selon l'une quelconque des revendications précédentes.

11. Train d'atterrissage selon la revendication 10, dans lequel l'élément mobile (201) est un atterrisseur.

12. Train d'atterrissage selon la revendication 10, dans lequel l'élément mobile (201) est une porte de soute.

## Patentansprüche

1. Sicherungsmechanismus zum selektiven Halten einer Olive (200) eines beweglichen Elements (201), wobei der Sicherungsmechanismus umfasst:
- einen Haken (3), der zwischen einer Freigabeposition und einer Halteposition zum Halten einer Olive des beweglichen Elements beweglich ist;
- ein Verriegelungsorgan (10), das mit dem Haken interagiert und zwischen einer Verriegelungsposition, in der es den Haken in der Halteposition blockiert, und einer Entriegelungsposition beweglich ist, in der der Haken frei ist, sich unter dem Schub der Olive des beweglichen Elements zu verschieben;
- Detektionsmittel, die geeignet sind, eine Situation zu erkennen, in der sich der Haken in der Halteposition befindet und ob die Olive in dem Haken vorhanden ist;
wobei die Detektionsmittel einen ersten Sensor (20) umfassen, der mit dem Haken oder dem Verriegelungsorgan zusammenwirkt, um zu erkennen, ob der Haken in der Halteposition ist,
**dadurch gekennzeichnet, dass** die Detektionsmittel ferner einen zweiten Sensor (30) umfassen, der angeordnet ist, um mit einem Teil des beweglichen Elements (31; 42) zusammenzuwirken, der von der Olive verschieden ist, um ein Vorhandensein des beweglichen Elements in unmittelbarer Nähe des Sicherungsmechanismus in der Position zu erfassen, die das bewegliche Element einnimmt, wenn die Olive in dem Haken vorhanden ist.

2. Sicherungsmechanismus nach Anspruch 1, bei dem der zweite Sensor geeignet ist, direkt mit einem Teil (31) des beweglichen Elements (201) zusammenzuwirken, um ein Vorhandensein des beweglichen Elements in unmittelbarer Nähe des Sicherungsmechanismus in der Position zu erfassen, die das bewegliche Element einnimmt, wenn die Olive in dem Haken vorhanden ist.

3. Sicherungsmechanismus nach Anspruch 2, bei dem der zweite Sensor (30) ein Näherungssensor ist, wobei der Teil (31) des beweglichen Elements, der mit dem zweiten Sensor zusammenwirkt, ein Ziel bildet.

4. Sicherungsmechanismus nach Anspruch 1, bei dem der zweite Sensor (30) indirekt mit dem Teil (42) des beweglichen Elements über einen Anzeigehebel zusammenwirkt, der beweglich an dem Sicherungsmechanismus gelagert ist, wobei der Teil des beweglichen Elements den Hebel zwischen einer Position, in der der Anzeigehebel nahe dem zweiten Sensor ist, und einer Position verschiebt, in der der Anzeigehebel von dem zweiten Sensor entfernt ist, wobei eine der genannten Positionen einem Vorhandensein des beweglichen Elements in unmittelbarer Nähe des Sicherungsmechanismus in der Position entspricht, die das bewegliche Element einnimmt, wenn die Olive in dem Haken vorhanden ist.

5. Sicherungsmechanismus nach Anspruch 4, bei dem der zweite Sensor (30) ein Näherungssensor ist, der mit einem Teil des Anzeigehebels zusammenwirkt, der ein Ziel (41) für den zweiten Sensor bildet.

6. Sicherungsmechanismus nach Anspruch 5, bei dem der zweite Sensor (30) und das Ziel (41) zueinander so montiert sind, dass sie eine relativ konvergente Bahn haben.

7. Sicherungsmechanismus nach Anspruch 5, bei dem das Ziel (41) an dem Anzeigehebel (40) gelagert ist, um einer Bahn zu folgen, die parallel zu einer frontalen Fläche des zweiten Sensors (30) ist, derart, dass der zweite Sensor (30) und das Ziel (41) eine relativ tangentiale Bahn haben.

8. Sicherungsmechanismus nach einem der vorhergehenden Ansprüche, bei dem mindestens einer der Sensoren (20, 30) ein Näherungssensor ist.

9. Sicherungsmechanismus nach einem der vorhergehenden Ansprüche, bei dem mindestens einer der Sensoren (20, 30) an einem ortsfesten Teil montiert ist.

10. Fahrwerksanlage, umfassend ein bewegliches Element (201), das zwischen einer abgesenkten Position und einer angehobenen Position beweglich ist, in der eine Olive (200), die fest mit dem beweglichen Element (201) verbunden ist, in dem Haken (3) eines Sicherungsmechanismus nach einem der vorhergehenden Ansprüche aufgenommen ist.

11. Fahrwerksanlage nach Anspruch 10, bei dem das bewegliche Element (201) ein Fahrwerk ist.

12. Fahrwerksanlage nach Anspruch 10, bei dem das bewegliche Element (201) eine Laderaumtür ist.

## Claims

1. An uplock for selectively retaining a capture pin (200) of a movable element (201), the uplock comprising:
a hook (3) which is movable between a release position and a position for retaining a capture pin of the movable element;
a locking member (10) interacting with the hook and movable between a locked position in which it immobilizes the hook in the retaining position and an unlocked position in which the hook is free to be displaced under the force of the capture pin of the movable element;
detection means adapted to detect a situation in which the hook is in the retaining position and whether the capture pin is present in the hook,
wherein the detection means comprise a first sensor (20) which cooperates with the hook or the locking member in order to detect whether the hook is in the retaining position, **characterized in that** the detection means further comprise a second sensor (30) which is disposed to cooperate with a portion of the movable element (31; 42) which is distinct from the capture pin in order to detect the presence of the movable element in the immediate proximity of the uplock in the position occupied by the movable element when the capture pin is present in the hook.

2. The uplock as claimed in claim 1, in which the second sensor is adapted to cooperate directly with a portion (31) of the movable element (201) in order to detect the presence of the movable element in the immediate proximity of the uplock in the position occupied by the movable element when the capture pin is present in the hook.

3. The uplock as claimed in claim 2, in which the second sensor (30) is a proximity sensor, with the portion (31) of the movable member that cooperates with the second sensor forming a target.

4. The uplock as claimed in claim 1, in which the second sensor (30) cooperates indirectly with the portion (42) of the movable element via an indicator lever which is movably mounted on the uplock, the portion of the movable element displacing the lever between a position in which the indicator lever is proximate to the second sensor and a position in which the indicator lever is remote from the second sensor, one of said positions corresponding to the presence of the movable element in the immediate proximity of the uplock in the position occupied by the movable element when the capture pin is present in the hook.

5. The uplock as claimed in claim 4, in which the second sensor (30) is a proximity sensor which cooperates with a portion of the indicator lever forming a target (41) for the second sensor.

6. The uplock as claimed in claim 5, in which the second sensor (30) and the target (41) are mounted relative to each other so as to have a concurrent relative trajectory.

7. The uplock as claimed in claim 5, in which the target (41) is mounted on an indicator lever (40) so as to follow a trajectory which is parallel to a front surface of the second sensor (30) such that the second sensor (30) and the target (41) have a tangential relative trajectory.

8. The uplock as claimed in any one of the preceding claims, in which at least one of the sensors (20, 30) is a proximity sensor.

9. The uplock as claimed in any one of the preceding claims, in which at least one of the sensors (20, 30) is mounted on a fixed portion.

10. A landing gear assembly comprising an element (201) which is movable between a lowered position and a raised position in which a capture pin (200) that is integral with the movable element (201) is received in the hook (3) of an uplock as claimed in any one of the preceding claims.

11. The landing gear assembly as claimed in claim 10, in which the removable element (201) is landing gear.

12. The landing gear assembly as claimed in claim 10, in which the movable element (201) is a cargo hold door.
